# EUROPÄISCHE PATENTSCHRIFT

(11) **EP 3 036 142 B1**
(45) Veröffentlichungstag und Bekanntmachung des Hinweises auf die Patenterteilung: **25.10.2017**
(21) Anmeldenummer: 14741546.7
(22) Anmeldetag: 11.07.2014
(51) Int. Cl.: B60W 30/06, B62D 15/02, B60W 50/08, F16H 59/02, B60K 20/02

(54) **VERFAHREN ZUM BEDIENEN EINES FAHRERASSISTENZSYSTEMS EINES KRAFTFAHRZEUGS MIT WENIGSTENS EINER BEDIENVORRICHTUNG**
METHOD FOR OPERATING A DRIVER ASSISTANCE SYSTEM OF A VEHICLE WITH AT LEAST ONE CONTROL DEVICE
PROCÉDÉ DE COMMANDE D'UN SYSTÈME D'AIDE À LA CONDUITE D'UN VÉHICULE AVEC AU MOINS UN DISPOSITIF DE COMMANDE

(30) Priorität: 19.08.2013 DE 102013216365
(43) Veröffentlichungstag der Anmeldung: 29.06.2016
(73) Patentinhaber: Volkswagen Aktiengesellschaft, 38440 Wolfsburg (DE)
(72) Erfinder: ULRICH, Dominik, 38448 Wolfsburg (DE)
(86) Internationale Anmeldenummer: PCT/EP2014/064979
(87) Internationale Veröffentlichungsnummer: WO 2015/024708

(56) Entgegenhaltungen:
- DE-A1-102008 019 346
- DE-A1-102009 057 646
- DE-A1-102010 029 184

## Beschreibung

Die Erfindung betrifft ein Verfahren zum Bedienen eines Fahrerassistenzsystems eines Kraftfahrzeugs mit wenigstens einer Bedienvorrichtung gemäß den Merkmalen vom Oberbegriff des Patentanspruchs 1.

Aus der die Merkmale des Oberbegriffs von Patentanspruch 1 bildenden
DE 10 2010 029 184 A1 ist ein als Rangierassistenzsystem ausgebildetes Fahrerassistenzsystem bekannt, welches über den Wählhebel eines Automatik-Getriebes bedient wird. Die Bedienung erfolgt konkret über eine zusätzliche (dritte) Schaltgasse, die parallel zur Schaltgasse der üblichen Fahrstufen (Dauerfahrbetrieb, Sportfahrbetrieb, Neutralstellung und Parkstellung) oder auch quer dazu angeordnet sein kann.

In der ebenso die Merkmale des Oberbegriffs von Patentanspruch 1 aufweisenden DE 10 2006 028 045 A1 kann über die Bewegung des Wählhebels eines Automatik-Getriebes in einer dritten Schaltgasse die Funktion eines als Geschwindigkeitsregelanlage ausgebildeten Fahrerassistenzsystems bedient werden.

Der Anstoß und die Durchführung einer Operation der Fahrerassistenzsysteme (beispielsweise Veränderung eines Knickwinkels zwischen Zugfahrzeug und Anhänger bzw. Erhöhung oder Erniedrigung der Geschwindigkeit um ein definiertes Intervall) erfolgt jeweils allein durch tastende bzw. tippende Auslenkbewegungen des Wählhebels.

Eine Bedienung des Fahrerassistenzsystems ist dadurch zwar sehr leicht möglich, jedoch wird hierdurch auch eine ungewollte Bedienung begünstigt.

Die DE 10 2009 057 646 A1 offenbart ein Parkassistenzsystem sowie ein Verfahren zum vollautomatischen Ein- oder Ausparken. Das Parkassistenzsystem umfasst einen Sicherheitstaster, der zur fortdauernden Durchführung des vollautomatischen Ein- oder Ausparken vom Fahrer gedrückt gehalten werden muss. Der Sicherheitstaster ist ein extra Taster oder ein anderweitig bereits vorhandenes Bedienelement. Die Einleitung und alleinige Fortsetzung des Ein- oder Ausparkens ist bei diesem System mittels Gangwahlschalter nicht möglich.

Die DE 10 2008 019346 A1 offenbart ein Verfahren und eine Vorrichtung zum automatischen Ein- und Ausparken, bei welchem der automatische Ein- und Ausparkvorgang solange vollzogen wird, wie eine Stellvorrichtung von einem Benutzer manuell in einer bestimmten Stellung gehalten wird. Die Einleitung und alleinige Fortsetzung des Ein- oder Ausparkens ist bei diesem System mittels Gangwahlschalter nicht möglich.

Ausgehend von diesem Stand der Technik ist es daher die Aufgabe der vorliegenden Erfindung, ein Verfahren zum Bedienen eines Fahrerassistenzsystems eines Kraftfahrzeugs mit wenigstens einer Bedienvorrichtung bereitzustellen, mit dem eine sehr sichere Bedienung möglich ist.

Diese Aufgabe wird mit den Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht aus von einem Verfahren zum Bedienen eines Fahrerassistenzsystems eines Kraftfahrzeugs mit wenigstens einer Bedienvorrichtung, wobei die Bedienvorrichtung als ein in wenigstens zwei Schaltgassen bewegbarer Wählhebel eines halb- oder vollautomatischen Getriebes ausgebildet ist und eine Schaltgasse wenigstens zur Bedienung des Fahrerassistenzsystems dient.

Erfindungsgemäß wird vorgeschlagen, dass die wenigstens zur Bedienung des Fahrerassistenzsystems dienende Schaltgasse sowohl zur Aktivierung des Fahrerassistenzsystems als auch zum Anstoß einer Operation des Fahrerassistenzsystems dient und mit wenigstens einer von einer Ruhestellung (Rastpunkt) ausgehenden Auslenkstellung (Auslenkpunkt) monostabil ausgebildet ist, wobei eine Operation des Fahrerassistenzsystems nur dann vollständig durchgeführt wird, wenn der Wählhebel wenigstens für die benötigte Dauer der Operation in der wenigstens einen Auslenkstellung (Auslenkpunkt) gehalten wird.

Im Gegensatz zum Stand der Technik, bei dem eine einfache Tippbewegung zur Durchführung einer Operation des Fahrerassistenzsystems genügt, ist bei der Erfindung also zunächst ein Aktivieren durch Verbringen des Wählhebels in eine bestimmte Schaltgasse und dann das Halten des Wählhebels in einer Auslenkstellung zur Durchführung einer Operation des Fahrerassistenzsystems notwendig.

Dies macht insbesondere solche Fahrerassistenzsysteme sicherer händelbar, bei denen das Kraftfahrzeug in direkter Interaktion mit seiner Umwelt, insbesondere mit anderen Verkehrsteilnehmern (beispielsweise andere Fahrzeuge) steht.

Monostabil heißt dabei, dass die Bedienvorrichtung, solange sie nicht unter Kraftaufwand in eine Auslenkstellung gebracht bzw. in einer solchen gehalten wird, in ihrer Ruhestellung verharrt bzw. in eine solche zurückkehrt.

Eine Operation des Fahrerassistenzsystems ist dann vollständig durchgeführt, wenn das mit dem Anstoß der Operation verfolgte Ziel (beispielsweise das Einparken des Kraftfahrzeugs in eine Parklücke) auch erreicht wird.

Nach einer Weiterbildung des Verfahrens wird sowohl zur Aktivierung des Fahrerassistenzsystems als auch zum Anstoß einer Operation des Fahrerassistenzsystems eine dritte Schaltgasse verwendet.

Hierdurch wird zum einen der Bedarf an Bedienelementen reduziert (ein gesondertes Bedienelement zur Aktivierung ist nicht erforderlich), zum anderen ist auf diese Weise ein sehr schnelles und ergonomisches Arbeiten mit dem Fahrerassistenzsystem möglich.

Eine andere Ausbildung der Erfindung sieht vor, dass die verwendete dritte Schaltgasse zwei von deren Rastpunkt ausgehende Auslenkpunkte aufweist, wobei der Rastpunkt oder einer der Auslenkpunkte zur Aktivierung des Fahrerassistenzsystems dienen und eine Operation des Fahrerassistenzsystems nur dann gestartet und durchgeführt wird, wenn der Wählhebel wenigstens für die Dauer der Operation in einem der Auslenkpunkte gehalten wird.

Hierdurch wird eine Bedienredundanz geschaffen, so dass der Bediener mehrere Möglichkeiten einer Bedienbewegung hat und die für ihn angenehmste wählen kann.

Nach einer anderen Weiterbildung des Verfahrens wird mit der Bedienvorrichtung ein als vollautomatischer Einparkassistent ausgebildetes Fahrerassistenzsystem bedient, wobei nach Aktivierung des Einparkassistenten und beim Halten des Wählhebels in dem wenigstens einen Auslenkpunkt das Kraftfahrzeug selbsttätig in eine geeignete Parklücke eingeparkt wird.

Auf diese Weise ist ein vollautomatisches Einparken, bei dem also das Kraftfahrzeug vom Fahrerassistenzsystem im Wesentlichen unter automatischer Regelung von Geschwindigkeit, unter automatischer Ansteuerung der Lenkung und der Bremsanlage selbsttätig in eine geeignete Parklücke eingeparkt wird, sehr sicher möglich.

Die Erfindung betrifft aber auch eine Bedienvorrichtung zur Durchführung des erfindungsgemäßen Verfahrens.

Eine solche Bedienvorrichtung weist einen in wenigstens drei Schaltgassen bewegbaren Wählhebel eines halb- oder vollautomatischen Getriebes auf, wobei wenigstens eine Schaltgasse mit jeweils einem Rastpunkt und wenigstens einem Auslenkpunkt monostabil ausgebildet ist und wobei durch Verfahren des Wählhebels in den Rastpunkt oder durch Verfahren in den wenigstens einen Auslenkpunkt ein Fahrerassistenzsystem aktivierbar ist und wobei nur durch Halten des Wählhebels in dem wenigstens einen Auslenkpunkt wenigstens für die für eine Operation des Fahrerassistenzsystems benötigte Zeitdauer eine solche Operation vollständig durchführbar ist.

Nur eine solche Bedienvorrichtung bietet die Voraussetzung dafür, dass das erfindungsgemäße Verfahren durchgeführt werden kann.

Die Bedienvorrichtung kann dabei derart weitergebildet werden, dass die wenigstens eine Schaltgasse zwei Auslenkpunkte aufweist. Somit kann der Bediener leicht zwischen mehreren Bedienpositionen wählen.

Gemäß einer anderen Weiterbildung der Bedienvorrichtung sind die Schaltgassen parallel zur Fahrtrichtung ausgerichtet und das Fahrerassistenzsystem ist über die in Fahrtrichtung gesehen links außen liegende Schaltgasse bedienbar.

Hierdurch wird eine eindeutige Trennung zwischen der Bedienung des Fahrerassistenzsystems und der üblichen Bedienung (Einstellung Fahrstufen, manuelle Gangwahl) erreicht.

Es ist sehr zweckmäßig, wenn über die wenigstens eine Schaltgasse ein als vollautomatischer Einparkassistent ausgebildetes Fahrerassistenzsystem bedienbar ist, wobei nach Verfahren des Wählhebels in den Rastpunkt oder durch dessen Verfahren in den wenigstens einen Auslenkpunkt und beim Halten des Wählhebels in dem wenigstens einen Auslenkpunkt das Kraftfahrzeug selbsttätig in eine geeignete Parklücke einparkbar ist.

Auf diese Weise lässt sich mit dem Wählhebel sehr intuitiv ein Einparkvorgang durchführen.

Schließlich betrifft die Erfindung auch ein Kraftfahrzeug mit wenigstens einer erfindungsgemäßen Bedienvorrichtung zur Durchführung des erfindungsgemäßen Verfahrens.

Bei einem derartig ausgestalteten Kraftfahrzeug lässt sich ein mit der Bedienvorrichtung zu bedienendes Fahrerassistenzsystem komfortabel und sicher nutzen.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: eine Draufsicht auf ein Kraftfahrzeug, welches mit einer solchen Bedienvorrichtung (Wählhebel für ein Automatik-Getriebe) ausgestattet ist, mit der das erfindungsgemäße Verfahren durchführbar ist,
- Fig. 2: die Schaltgassen, in denen der Wählhebel bewegbar ist, mit Rastpunkten und Auslenkpunkten, in einer ersten Ausführungsform,
- Fig. 3: eine entsprechende Draufsicht auf den Wählhebel im Bereich der Mittelkonsole mit Schaltgassen gemäß Fig. 2,
- Fig. 4: ein vereinfachtes Blockschaltbild zur Erläuterung bestimmter Aspekte der Erfindung,
- Fig. 5: ein Signaldiagramm zur weiteren Erläuterung des Verfahrens und
- Fig. 6 und 7: Darstellungen zur Erläuterung eines vollautomatischen Einparkvorgangs mit Hilfe des erfindungsgemäßen Verfahrens.

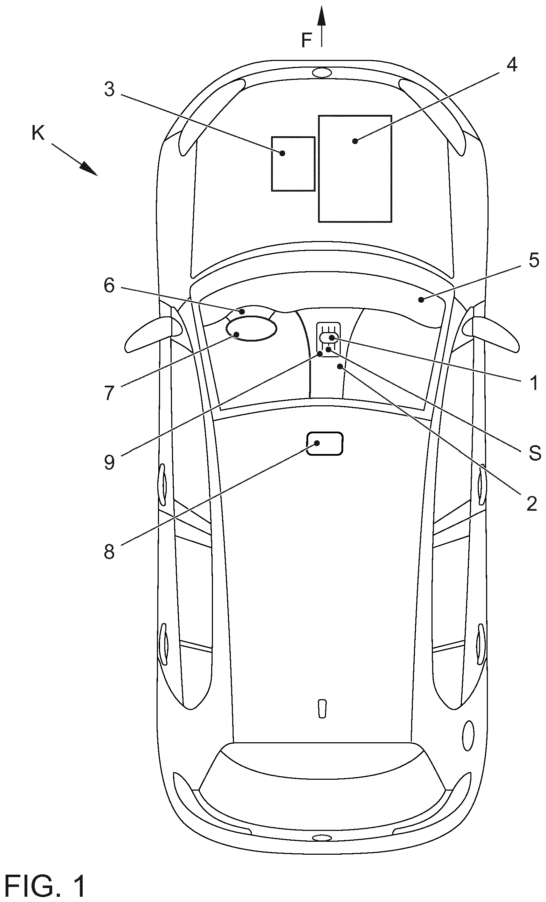

Zunächst wird auf die Fig. 1 Bezug genommen.

Darin ist ein Kraftfahrzeug K mit einem Motor 4 und einem damit wirkungsmäßig verbundenen Automatik-Getriebe 3 ersichtlich.

Zur Bedienung des Automatik-Getriebes 3 bzw. zur Gangwahl ist ein Wählhebel 1 vorhanden, der im Bereich einer Mittelkonsole 2 angeordnet ist.

Der Wählhebel 1 ragt aus einer, Schaltgassen S aufweisende Schaltblende 9 hervor und ist in den Schaltgassen S bewegbar.

Zur Ansteuerung des als vollautomatischer Einparkassistent ausgebildeten Fahrerassistenzsystems ist ferner ein Steuergerät 8 vorhanden, welches zur Koordinierung entsprechender Daten- und Steuersignale dient.

Zur Darstellung notwendiger Informationen für einen Fahrer dient ein Kombiinstrument 6, welches im Sichtfeld des Fahrers im Bereich einer Instrumententafel 5 hinter einem Lenkrad 7 angeordnet ist.

Mit F ist eine übliche Fahrtrichtung des Kraftfahrzeugs K angegeben.

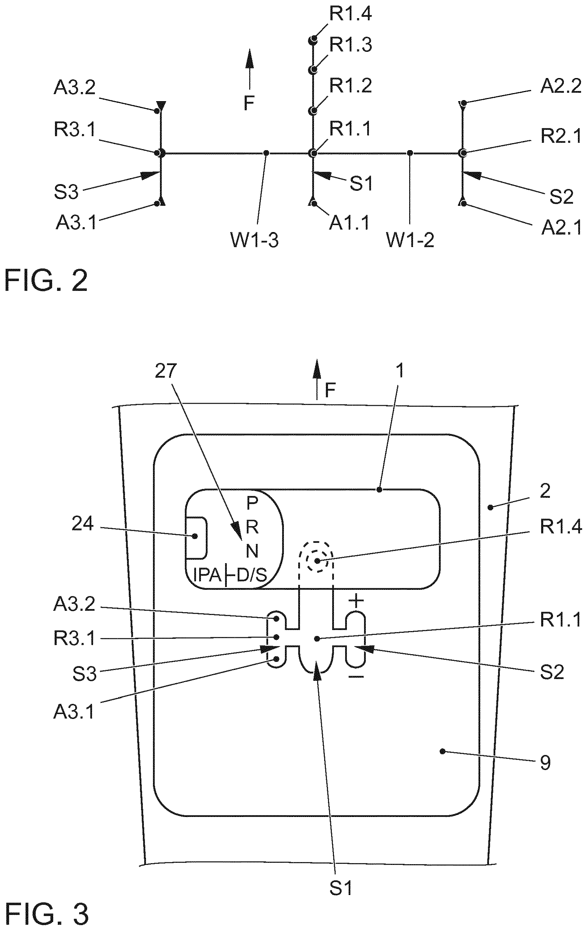

In der Fig. 2 ist nunmehr das Schaltschema prinziphaft dargestellt, in der sich der Wählhebel 1 innerhalb der Schaltblende 9 bewegen kann.

Gemäß dieser Darstellung sind eine erste Schaltgasse S1, eine zweite Schaltgasse S2 und eine dritte Schaltgasse S3 vorhanden. Die erste Schaltgasse S1 ist dabei mit vier Rastpunkten R1.1 bis R1.4 versehen, wobei der Rastpunkt R1.1 der Stellung des Wählhebels 1 im "Dauerfahrbetrieb D", der Rastpunkt R1.2 der Stellung des Wählhebels 1 in der "Neutralstellung N", der Rastpunkt R1.3 der Stellung des Wählhebels 1 im "Rückfahrbetrieb R" und der Rastpunkt R1.4 der Stellung des Wählhebels 1 in einer "Parkstellung P" bedeutet.

Sämtlichen in der Figur dargestellten Rastpunkten R ist gemeinsam, dass der Wählhebel 1 zu diesen Rastpunkten R verfahren werden kann und in einer solchen Position solange verharrt, bis der Bediener den Wählhebel 1 unter Kraftaufbringung in eine andere Position verbringt.

Ausgehend von dem Rastpunkt R1.1 ist in der Schaltgasse S1 noch ein Auslenkpunkt A1.1 ersichtlich, zu welchem der Wählhebel 1 unter Kraftaufbringung ausgelenkt werden kann. Sobald die Bedienkraft aufgegeben wird, verfährt der Wählhebel 1 selbsttätig wieder in den Rastpunkt R1.1 zurück. Der Auslenkpunkt A1.1 steht für eine solche Position des Wählhebels 1, in der ein "Sportfahrbetrieb S" gewählt ist.

Die zweite Schaltgasse S2 weist zwei Auslenkpunkte A2.1 und A2.2 auf, welche unter Auslenkung des Wählhebels 1 von einem Rastpunkt R2.1 ausgehend erreicht werden können.

Die Schaltgasse S2 dient dabei in bekannter Weise einer manuellen Gangwahl durch tippende Bedienung (kurzes Auslenken nach A2.2=höherer Gang, kurzes Auslenken nach A2.1=niedrigerer Gang).

Schließlich weist die dritte Schaltgasse S3 einen ersten Auslenkpunkt A3.1 und einen zweiten Auslenkpunkt A3.2 auf, welche ausgehend von dem Rastpunkt R3.1, aber auch von dem Rastpunkt R1.1 (Stellung des Wählhebels 1 im Dauerfahrbetrieb) erreichbar sind. Die dritte Schaltgasse S3 (mithin ein Verfahren des Wählhebels 1 in den Rastpunkt R3.1 oder ein Verfahren des Wählhebels 1 zu den Auslenkpunkten A3.1 oder A3.2) dient zum bewussten Aktivieren des Einparkassistenten. Die Auslenkpunkte A3.1 und A3.2 dienen darüber hinaus zum Anstoß einer Operation des automatischen Einparkassistenten.

Die Schaltgassen S1 bis S3 sind parallel zur Fahrtrichtung F ausgerichtet.

Um zwischen den Schaltgassen S1 und S2 bzw. S1 und S3 zu wechseln sind zwei Wechselgassen W1-2 bzw. W1-3 vorhanden, die wiederum senkrecht zu den Schaltgassen S1 bis S3 stehen.

Die in der Figur dargestellten Rastpunkte R können auch als Ruhestellung und die dargestellten Auslenkpunkte A auch als Auslenkstellung bezeichnet werden.

In Fig. 3 sind nunmehr die Schaltblende 9 und der aus dieser herausragende Wählhebel 1, wie sie sich dem Fahrer zeigen, näher dargestellt.

Auf dem Wählhebel 1 sind Beschriftungen 27 ersichtlich, welche auf die Funktionsstellung bzw. Gangwahl des Wählhebels 1 hinweisen sollen. Der Wählhebel 1 befindet sich in der Rastposition R1.4 (Parkstellung P).

Die Schaltgasse S3, welche zur Bedienung des vollautomatischen Einparkassistenten dient, ist ausschließlich über den Rastpunkt R1.1 (Dauerfahrbetrieb D) erreichbar. Dies ist auch durch die Beschriftung 27 angedeutet.

Schließlich ist am Wählhebel 1 noch eine Entriegelungstaste 24 ersichtlich, welche gedrückt werden muss, damit man den Wählhebel 1 beispielsweise vom Rastpunkt 1.4 (Parkstellung P) zum Rastpunkt R1.1 (Dauerfahrbetrieb D) bewegen kann.

Um nun mittels der dargestellten Bedienvorrichtung einen automatischen Einparkvorgang durchführen zu können, ist es erforderlich, dass der Fahrer den Einparkassistenten zunächst bewusst durch Verfahren des Wählhebels 1 aus dem Rastpunkt R 1.1 in die dritte Schaltgasse S3 (Rastpunkt R3.1, Auslenkpunkt A3.1 oder A3.2) aktiviert. Die Aktivierung bleibt zunächst solange erhalten, wie sich der Wählhebel 1 in der dritten Schaltgasse S3 befindet. Anschließend muss durch Bewegung des Wählhebels 1 zu einem der Auslenkpunkte A3.1 oder A3.2 ein vollautomatischer Einparkvorgang auslöst und dieser durch weiteres Halten des Wählhebels 1 im gewählten Auslenkpunkt (A3.1 oder A3.2) auch aufrecht erhalten werden.

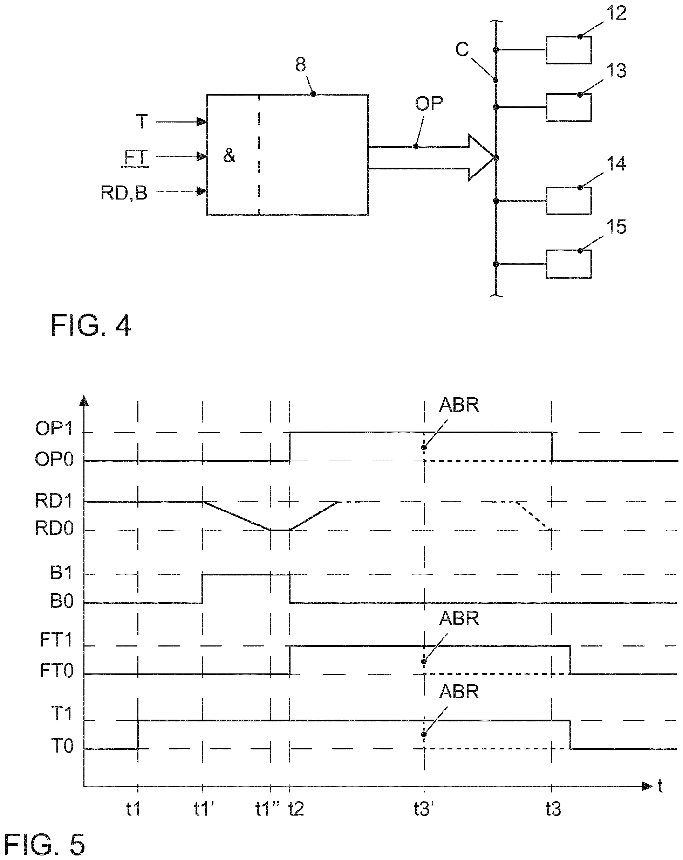

Wie in Fig. 4 ersichtlich, prüft das Steuergerät 8 in einer UND-Verknüpfung nicht nur, ob durch Verfahren des Wählhebels 1 in die dritte Schaltgasse S3 und durch Halten des Wählhebels 1 im Auslenkpunkt A3.1 oder A3.2 ein Aktivierungssignal T und ein Operationssignal FT für den Einparkassistenten anliegen, sondern auch, ob ein anliegendes Raddrehzahlsignal RD und ein anliegendes Bremssignal B den Anforderungen zur Ausgabe eines Operationssignals OP genügen. Dazu muss sich nämlich das Kraftfahrzeug K im Stillstand befinden und es muss die Betriebsbremse betätigt sein.

Erst dann steuert das Steuergerät 8 des Einparkassistenten über einen CAN-Bus C die für einen automatischen Einparkvorgang notwendigen Komponenten (im Wesentlichen ein Motorsteuergerät 12, ein Getriebesteuergerät 13, ein Schlupfregelungssteuergerät 14 und ein Lenkungssteuergerät 15) in geeigneter Weise an. Wie dies genau erfolgt, ist nicht Gegenstand dieser Erfindung und soll deshalb hier nicht näher erläutert werden.

Ergänzend sei auf die Fig. 5 bis 7 verwiesen, welche den Signalverlauf und den Vorgang der Suche einer Parklücke P sowie den Einparkvorgang in eine solche noch einmal verdeutlichen sollen.

So sind das Aktivierungssignal T, das Operationssignal FT, das Bremssignal B, das Raddrehzahlsignal RD und das Operationssignal OP über der Zeit t dargestellt.

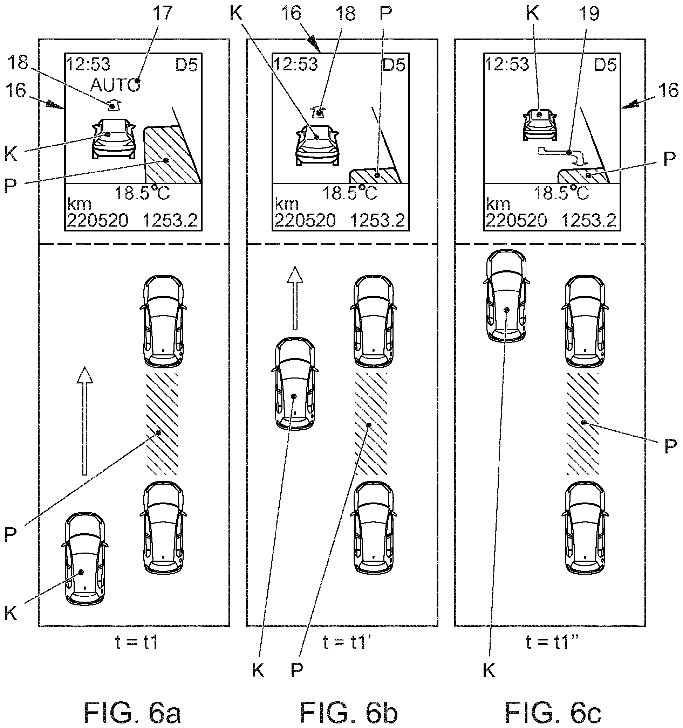

Üblicherweise hat ein Kraftfahrzeug K vor Starten eines Einparkvorgangs noch eine geringe Geschwindigkeit, so dass ein Raddrehzahlsignal RD gleich RD1 (geringe Geschwindigkeit, beispielsweise kleiner 40 km/h) vorliegt. Entscheidet sich der Fahrer nun dafür, den vollautomatischen Einparkassistenten in Anspruch zu nehmen, so wird er diesen durch Verfahren des Wählhebels 1 in die dritte Schaltgasse S3 zunächst aktivieren, so dass ein Aktivierungssignal T = T1 vorliegt (Zeitpunkt t1) und die Suche nach einer geeigneten Parklücke P beginnt.
Zusätzlich weist eine Anzeige 16 im Kombiinstrument 6 des Kraftfahrzeugs K durch einen Schriftzug 17 und ein Pfeilsymbol 18 auf den aktivierten Zustand des Einparkassistenten hin (vergleichen Fig. 6a).

Sobald der Einparkassistent (dieser wird auch als IPA bezeichnet) eine geeignete Parklücke P gefunden hat, so erlischt der Schriftzug17 in der Anzeige 16.

Der Fahrer wird daraufhin die Betriebsbremse betätigen (t = t1'), so dass ein Bremssignal B = B1 am Steuergerät 8 anliegt und sich das Kraftfahrzeug K spürbar verlangsamt (vgl. Fig. 6b).

Ist die Position des Kraftfahrzeugs K für einen vollautomatischen Einparkvorgang in die Parklücke P geeignet, so erscheint in der Anzeige 16 ein entsprechendes Pfeilsymbol 19 und das Kraftfahrzeug K wird vom Fahrer zum Stillstand gebracht (t = t1" und RD = RD0).

Damit nun durch das Fahrerassistenzsystem eine Operation durchgeführt wird, also durch den Einparkassistenten vollautomatisch ein Einparkvorgang erfolgt, muss der Fahrer zusätzlich den Wählhebel 1 in die Auslenkstellung A3.1 oder A3.2 bringen, so dass ein Operationssignal FT = FT1 erzeugt wird. Des Weiteren muss der Fahrer auch die Betriebsbremse lösen, so dass ein Bremssignal B = B0 am Steuergerät 8 anliegt.

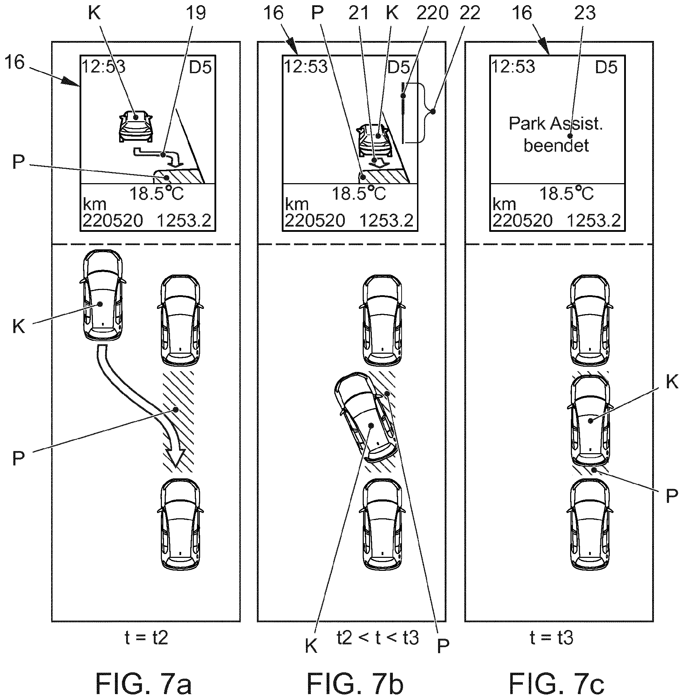

Erst dann (t = t2) wird vom Steuergerät 8 ein Operationssignal OP = OP1 ausgegeben und der Einparkassistent beginnt mit dem Einparkvorgang (vergleiche auch Fig. 7a).

Der Fahrer muss nun zumindest über die gesamte Zeitdauer des Einparkvorgangs (t2 bis t3) den Wählhebel 1 in der Auslenkstellung A3.1 oder A3.2 halten. Während des Einparkvorgangs wechselt wiederum die Anzeige 16 und es wird ein Pfeilsymbol 21 angezeigt. Des Weiteren wird eine Fortschrittsanzeige 22 mit einem Fortschrittsbalken 220 eingeblendet, welcher in der Darstellung von oben nach unten mit fortschreitendem Parkvorgang fortschreitet (vergleiche auch Fig. 7b).

Ist der Parkvorgang beendet (t = t3), so wird das Operationssignal OP vom Steuergerät 8 auf OP = OP0 zurückgesetzt und auf der Anzeige 16 erscheint eine entsprechende Meldung 23, welche auf das Ende des Parkvorgangs hinweist (vgl. Fig. 7c).

Kurz danach wird der Fahrer den Wählhebel 1 wieder aus der Auslenkstellung A3.1 in den Rastpunkt R1.3 zurückkehren lassen, so dass das Operationssignal FT auf FT = FT0 zurückgesetzt wird. Hiermit synchronisiert ist auch das Aktivierungssignal T, welches auf T = T0 zurückgesetzt wird. Abschließend kann der Wählhebel 1 in die Raststellung R 1.4 (Parkstellung P) bewegt werden.

Sehr wichtig ist die Tatsache, dass zu demjenigen Zeitpunkt ein sofortiger Abbruch ABR einer Operation des Einparkassistenten erfolgt, sobald der Wählhebel 1 vom Fahrer nicht mehr in der Auslenkstellung A3.1 oder A3.2 gehalten wird (t = t3'). In einem solchen Fall wird das Operationssignal FT sofort auf FT = FT0 zurückgesetzt, desgleichen das Aktivierungssignal T auf T = T0 und folglich auch das Operationssignal OP auf OP = OP0.

Der vollautomatische Einparkvorgang kann dann nicht erneut fortgesetzt werden, sondern es muss -falls gewünscht- die Suche nach einer neuen Parklücke erfolgen.

Die Erfindung ist nicht auf das bzw. die obigen Ausführungsbeispiele beschränkt. Diese wurden nur zur allgemeinen Erläuterung des Kerngedankens der Erfindung herangezogen. Die Erfindung kann im Rahmen ihres Schutzumfangs vielmehr auch andere als die zuvor beschriebenen Ausführungsbeispiele bzw. Ausprägungen annehmen. Hierbei kann sie insbesondere auch solche Merkmale aufweisen, die eine Kombination aus Einzelmerkmalen der jeweiligen Ansprüche darstellen.

### Bezugszeichenliste

- 1: Wählhebel für Automatik-Getriebe
- 2: Mittelkonsole
- 3: Automatik-Getriebe
- 4: Motor
- 5: Instrumententafel
- 6: Kombiinstrument
- 7: Lenkrad
- 8: Steuergerät für ein als vollautomatischer Einparkassistent ausgebildetes Fahrerassistenzsystem
- 9: Schaltblende
- 12: Motorsteuergerät
- 13: Getriebesteuergerät
- 14: Schlupfregelungssteuergerät
- 15: Lenkungssteuergerät
- 16: Anzeige im Kombiinstrument
- 17: Schriftzug
- 18: Pfeilsymbol
- 19: Pfeilsymbol
- 21: Pfeilsymbol
- 22: Fortschrittsanzeige
- 220: Fortschrittsbalken
- 23: Schriftzug

- A: Auslenkpunkte
- ABR: Abbruch einer Operation des Einparkassistenten
- B: Bremssignal
- C: CAN-Bus
- F: Fahrtrichtung
- K: Kraftfahrzeug
- OP: Operationssignal des Einparkassistenten
- OP1: Operation des Einparkassistenten
- OP0: keine Operation des Einparkassistenten
- R: Rastpunkte
- RD: Raddrehzahl
- S: Schaltgassen
- S1: erste Schaltgasse
- S2: zweite Schaltgasse
- S3: dritte Schaltgasse
- t: Zeit
- t1: Zeitpunkt einer Aktivierung des Einparkassistenten
- t2: Zeitpunkt des Anstoßes einer Operation des Einparkassistenten
- t3: Zeitpunkt der Fertigstellung einer Operation des Einparkassistenten
- t3': Zeitpunkt des Abbruchs einer Operation des Einparkassistenten
- T: Aktivierungssignal für den Einparkassistenten
- FT: Operationssignal für den Einparkassistenten
- W1-2: Wechselgasse von der ersten zur zweiten Schaltgasse und umgekehrt
- W1-3: Wechselgasse von der ersten zur dritten Schaltgasse und umgekehrt

## Patentansprüche

1. Verfahren zum Bedienen eines Fahrerassistenzsystems eines Kraftfahrzeugs (K) mit wenigstens einer Bedienvorrichtung (1), wobei die Bedienvorrichtung (1) als ein in wenigstens zwei Schaltgassen (S1-S3) bewegbarer Wählhebel eines halb- oder vollautomatischen Getriebes (3) ausgebildet ist und eine Schaltgasse (S3) wenigstens zur Bedienung des Fahrerassistenzsystems dient, **dadurch gekennzeichnet, dass** die wenigstens zur Bedienung des Fahrerassistenzsystems dienende Schaltgasse (S3) sowohl zur Aktivierung des Fahrerassistenzsystems als auch zum Anstoß (FT1) einer Operation (OP1) des Fahrerassistenzsystems dient und mit wenigstens einer von einer Ruhestellung (R3.1) ausgehenden Auslenkstellung (A3.1, A3.2) monostabil ausgebildet ist, wobei eine Operation (OP1) des Fahrerassistenzsystems nur dann vollständig durchgeführt wird, wenn der Wählhebel (1) wenigstens für die benötigte Dauer (t2 bis t3) der Operation (OP1) in der wenigstens einen Auslenkstellung (A3.1, A3.2) gehalten wird.

2. Verfahren nach Anspruch 1, **dadurch gekennzeichnet, dass** sowohl zur Aktivierung (T1) des Fahrerassistenzsystems als auch zum Anstoß (FT1) einer Operation (OP1) des Fahrerassistenzsystems eine dritte Schaltgasse (S3) verwendet wird.

3. Verfahren nach Anspruch 1 oder 2, **dadurch gekennzeichnet, dass** die verwendete dritte Schaltgasse (S3) zwei von deren Ruhestellung (R3.1) ausgehende Auslenkstellungen (A3.1, A3.2) aufweist, wobei die Ruhestellung (R3.1) oder einer der Auslenkstellungen (A3.1, A3.2) zur Aktivierung (T1) des Fahrerassistenzsystems dienen und eine Operation (OP1) des Fahrerassistenzsystems nur dann gestartet und durchgeführt wird, wenn der Wählhebel (1) wenigstens für die Dauer (t2 bis t3) der Operation (OP1) in einer der Auslenkstellungen (A3.1, A3.2) gehalten wird.

4. Verfahren nach einem der vorhergehenden Ansprüche, **dadurch gekennzeichnet, dass** mit der Bedienvorrichtung (1) ein als vollautomatischer Einparkassistent ausgebildetes Fahrerassistenzsystem bedient wird, wobei nach Aktivierung (T1) des Einparkassistenten und beim Halten des Wählhebels (1) in der wenigstens einen Auslenkstellung (A3.1, A3.2) das Kraftfahrzeug (K) selbsttätig in eine geeignete Parklücke (P) eingeparkt wird.

5. Bedienvorrichtung (1) zur Durchführung des Verfahrens nach einem der Ansprüche 1 bis 4, mit einem in wenigstens drei Schaltgassen (S1-S3) bewegbaren Wählhebel (1) eines halb- oder vollautomatischen Getriebes (3), wobei wenigstens eine Schaltgasse (S3) mit jeweils einem Rastpunkt (R3.1) und wenigstens einem Auslenkpunkt (A3.1, A3.2) monostabil ausgebildet ist und wobei durch Verfahren des Wählhebels (1) in den Rastpunkt (R3.1) oder durch Verfahren in den wenigstens einen Auslenkpunkt (A3.1, A3.2) ein Fahrerassistenzsystem aktivierbar (T1) ist und wobei nur durch Halten des Wählhebels (1) in dem wenigstens einen Auslenkpunkt (A3.1, A3.2) wenigstens für die für eine Operation (OP1) des Fahrerassistenzsystems benötigte Zeitdauer (t2 bis t3) eine solche Operation (OP1) vollständig durchführbar ist.

6. Bedienvorrichtung (1) nach Anspruch 5, **dadurch gekennzeichnet, dass** die wenigstens eine Schaltgasse (S3) zwei Auslenkpunkte (A3.1, A3.2) aufweist.

7. Bedienvorrichtung (1) nach Anspruch 5 oder 6, **dadurch gekennzeichnet, dass** die Schaltgassen (S1-S3) parallel zur Fahrtrichtung (F) ausgerichtet sind und über die in Fahrtrichtung (F) gesehen links außen liegende Schaltgasse (S3) das Fahrerassistenzsystem bedienbar ist.

8. Bedienvorrichtung (1) nach einem der Ansprüche 5 bis 7, **dadurch gekennzeichnet, dass** über die wenigstens eine Schaltgasse (S3) ein als vollautomatischer Einparkassistent ausgebildetes Fahrerassistenzsystem bedienbar ist, wobei nach Verfahren des Wählhebels (1) in den Rastpunkt (R3.1) oder durch dessen Verfahren in den wenigstens einen Auslenkpunkt (A3.1, A3.2) und beim Halten des Wählhebels (1) in dem wenigstens einen Auslenkpunkt (A3.1, A3.2) das Kraftfahrzeug (K) selbsttätig in eine geeignete Parklücke (P) einparkbar ist.

9. Kraftfahrzeug (K) mit wenigstens einer Bedienvorrichtung (1) nach einem der Ansprüche 5 bis 8.

## Claims

1. Method for operating a driver assistance system of a motor vehicle (K) having at least one operating device (1), wherein the operating device (1) is formed as a selector lever, which is movable in at least two shift slots (S1-S3), of a semi-automatic or fully automatic transmission (3), and one shift slot (S3) serves at least for the operation of the driver assistance system, **characterized in that** the shift slot (S3) which serves at least for the operation of the driver assistance system serves both for the activation of the driver assistance system and for the initiation (FT1) of an operation (OP1) of the driver assistance system and is of monostable form with at least one deflected position (A3.1, A3.2) proceeding from a rest position (R3.1), wherein an operation (OP1) of the driver assistance system is performed completely only when the selector lever (1) is held in the at least one deflected position (A3.1, A3.2) at least for the required duration (t2 to t3) of the operation (OP1).

2. Method according to Claim 1, **characterized in that** a third shift slot (S3) is used both for the activation (T1) of the driver assistance system and the initiation (FT1) of an operation (OP1) of the driver assistance system.

3. Method according to Claim 1 or 2, **characterized in that** the third shift slot (S3) that is used has two deflected positions (A3.1, A3.2) proceeding from the rest position (R3.1) thereof, wherein the rest position (R3.1) or one of the deflected positions (A3.1, A3.2) serves for the activation (T1) of the driver assistance system and an operation (OP1) of the driver assistance system is started and performed only when the selector lever (1) is held in one of the deflected positions (A3.1, A3.2) at least for the duration (t2 to t3) of the operation (OP1).

4. Method according to one of the preceding claims, **characterized in that** a driver assistance system in the form of a fully automatic parking assistant is operated by means of the operating device (1), wherein, after activation (T1) of the parking assistant and in the case of the selector lever (1) being held in the at least one deflected position (A3.1, A3.2), the motor vehicle (K) is automatically parked in a suitable parking bay (P).

5. Operating device (1) for carrying out the method according to one of Claims 1 to 4, having a selector lever (1), which is movable in at least three shift slots (S1-S3), of a semi-automatic or fully automatic transmission (3), wherein at least one shift slot (S3) is of monostable form with in each case one rest point (R3.1) and at least one deflected point (A3.1, A3.2), and wherein, by movement of the selector lever (1) into the rest point (R3.1) or by movement into the at least one deflected point (A3.1, A3.2), a driver assistance system is activatable (T1), and wherein an operation (OP1) of the driver assistance system can be performed completely only by virtue of the selector lever (1) being held in the at least one deflected point (A3.1, A3.2) at least for the time duration (t2 to t3) required for such an operation (OP1).

6. Operating device (1) according to Claim 5, **characterized in that** the at least one shift slot (S3) has two deflected points (A3.1, A3.2).

7. Operating device (1) according to Claim 5 or 6, **characterized in that** the shift slots (S1-S3) are oriented parallel to the direction of travel (F), and the driver assistance system can be operated by means of the shift slot (S3) situated at the left-hand outer side as viewed in the direction of travel (F).

8. Operating device (1) according to one of Claims 5 to 7, **characterized in that** a driver assistance system in the form of a fully automatic parking assistant can be operated by means of the at least one shift slot (S3), wherein, after movement of the selector lever (1) into the rest point (R3.1) or as a result of the movement of said selector lever into the at least one deflected point (A3.1, A3.2) and in the case of the selector lever (1) being held in the at least one deflected point (A3.1, A3.2), the motor vehicle (K) can be automatically parked in a suitable parking bay (P).

9. Motor vehicle (K) having at least one operating device (1) according to one of Claims 5 to 8.

## Revendications

1. Procédé de commande d'un système d'aide à la conduite d'un véhicule automobile (K) comprenant au moins un dispositif de commande (1), le dispositif de commande (1) étant réalisé sous forme de levier de sélection de transmission (3) semi- ou entièrement automatique pouvant être déplacé dans au moins deux voies de commutation (S1-S3) et une voie de commutation (S3) servant au moins à la commande du système d'aide à la conduite, **caractérisé en ce que** l'au moins une voie de commutation (S3) servant à la commande du système d'aide à la conduite sert à la fois à l'activation du système d'aide à la conduite et à l'amorce (FT1) d'une opération (OP1) du système d'aide à la conduite, et est réalisée sous forme monostable avec au moins une position de déviation (A3.1, A3.2) à partir d'une position de repos (R3.1), une opération (OP1) du système d'aide à la conduite n'étant effectuée complètement que lorsque le levier de sélection (1) est maintenu au moins pendant la durée nécessaire (t2 à t3) de l'opération (OP1) dans l'au moins une position de déviation (A3.1, A3.2).

2. Procédé selon la revendication 1, **caractérisé en ce qu'**à la fois pour l'activation (T1) du système de la conduite et pour l'amorce (FT1) d'une opération (OP1) du système d'aide à la conduite, on utilise une troisième voie de commutation (S3).

3. Procédé selon la revendication 1 ou 2, **caractérisé en ce que** la troisième voie de commutation utilisée (S3) présente deux positions de déviation (A3.1, A3.2) à partir de sa position de repos (R3.1), la position de repos (R3.1) ou l'une des positions de déviation (A3.1, A3.2) servant à l'activation (T1) du système d'aide à la conduite et une opération (OP1) du système d'aide à la conduite n'étant commencée et effectuée que si le levier de sélection (1) est maintenu au moins pendant la durée (t2 à t3) de l'opération (OP1) dans l'une des positions de déviation (A3.1, A3. 2) .

4. Procédé selon l'une quelconque des revendications précédentes, **caractérisé en ce qu'**un système d'aide à la conduite réalisé en tant qu'assistant de stationnement entièrement automatique est commandé avec le dispositif de commande (1), le véhicule automobile (K) étant automatiquement manoeuvré dans un espace de stationnement approprié (P) après l'activation (T1) de l'assistant de stationnement et lorsque le levier de sélection (1) est maintenu dans l'au moins une position de déviation (A3.1, A3.2).

5. Dispositif de commande (1) pour mettre en oeuvre le procédé selon l'une quelconque des revendications 1 à 4, comprenant un levier de sélection (1) pouvant être déplacé dans au moins trois voies de commutation (S1-S3) d'une transmission semi- ou entièrement automatique (3), au moins une voie de commutation (S3) étant réalisée sous forme monostable avec dans chaque cas un point d'encliquetage (R3.1) et au moins un point de déviation (A3.1, A3.2) et un système d'assistance à la conduite pouvant être activé (T1) par déplacement du levier de sélection (1) dans le point d'encliquetage (R3.1) ou par déplacement dans l'au moins un point de déviation (A3.1, A3.2) et une telle opération (OP1) ne pouvant être effectuée complètement qu'en maintenant le levier de sélection (1) dans l'au moins un point de déviation (A3.1, A3.2) au moins pendant la durée nécessaire (t2 à t3) pour une opération (OP1) du système d'aide à la conduite.

6. Dispositif de commande (1) selon la revendication 5, **caractérisé en ce que** l'au moins une voie de commutation (S3) présente deux points de déviation (A3.1, A3.2).

7. Dispositif de commande (1) selon la revendication 5 ou 6, **caractérisé en ce que** les voies de commutation (S1-S3) sont orientées parallèlement à la direction de conduite (F) et le système d'aide à la conduite peut être commandé par le biais de la voie de commutation (S3) située à l'extérieur à gauche vu dans la direction de conduite (F).

8. Dispositif de commande (1) selon l'une quelconque des revendications 5 à 7, **caractérisé en ce qu'**un système d'assistance à la conduite réalisé en tant qu'assistant de stationnement entièrement automatique peut être commandé par le biais de l'au moins une voie de commutation (S3), le véhicule automobile (K) pouvant être stationné automatiquement dans un espace de stationnement approprié (P) après le déplacement du levier de sélection (1) dans le point d'encliquetage (R3.1) ou par son déplacement dans l'au moins un point de déviation (A3.1, A3.2) et en maintenant le levier de sélection (1) dans l'au moins un point de déviation (A3.1, A3.2).

9. Véhicule automobile (K) comprenant au moins un dispositif de commande (1) selon l'une quelconque des revendications 5 à 8.
